# EUROPEAN PATENT APPLICATION

(11) **EP 4 607 807 A1**
(43) Date of publication of application: **27.08.2025**
(21) Application number: 23890191.2
(22) Date of filing: 28.06.2023
(51) Int. Cl.: H04B 3/04

(54) **COMMUNICATION DEVICE, COMMUNICATION CONTROL METHOD, AND COMMUNICATION SYSTEM**

(30) Priority: 18.11.2022 CN 202211448416
(71) Applicant: Huawei Technologies Co., Ltd., Shenzhen, Guangdong 518129 (CN)
(72) Inventor: LI, Weiguang, Shenzhen, Guangdong 518129 (CN); WU, Chao, Shenzhen, Guangdong 518129 (CN); PAN, Dao, Shenzhen, Guangdong 518129 (CN); LI, Yaqi, Shenzhen, Guangdong 518129 (CN); ZHU, Weiwei, Shenzhen, Guangdong 518129 (CN); LIN, Zefeng, Shenzhen, Guangdong 518129 (CN)
(74) Representative: Pfenning, Meinig & Partner mbB
(86) International application number: PCT/CN2023/103522
(87) International publication number: WO 2024/103749

(57) **Abstract**

Embodiments of this application provide a communication apparatus, a communication control method, and a communication system, and relate to the field of communication technologies, to improve a transmission rate between nodes. The communication apparatus includes one or more channel groups. The channel group includes a first coupler, a plurality of first channels, and a plurality of second couplers. The first coupler includes a first end and a plurality of second ends. One end of each of the plurality of first channels is coupled to a corresponding one of the plurality of second ends, and the other end of each of the plurality of first channels is coupled to a corresponding one of the plurality of second couplers. The first channel includes a first branch and a second branch. An impedance of the first branch is greater than an impedance of the second branch. The first channel is used to select to transmit, through the first branch, a communication signal transmitted by the communication apparatus, or transmit the communication signal through the second branch. In this way, a signal of a first channel connected to a source node or a destination node flows through a low-impedance branch, and a signal of a first channel not connected to the source node or the destination node flows through a high-impedance branch.

## Description

This application claims priority to Chinese Patent Application No. 202211448416.0, filed with the China National Intellectual Property Administration on November 18, 2022 and entitled "COMMUNICATION APPARATUS, COMMUNICATION CONTROL METHOD, AND COMMUNICATION SYSTEM", which is incorporated herein by reference in its entirety.

### TECHNICAL FIELD

This application relates to the field of communication technologies, and in particular, to a communication apparatus, a communication control method, and a communication system.

### BACKGROUND

ITU-T G.hn is a point-to-multipoint (point-to-multipoint, P2MP) wired communication technology used for a plurality of media such as a power line, a twisted pair, a coaxial cable, and a plastic optical fiber, and uses an orthogonal frequency division multiplexing (orthogonal frequency division multiplexing, OFDM) technology to modulate a signal on a wired medium for transmission. Other wired point-to-multipoint technologies further include a power line communication (power line communication, PLC) technology like Homeplug, a coaxial cable-based technology like MOCA (multimedia over coax alliance), and the like.

The Ethernet (IEEE 802.3) also defines various communication technologies based on various media, including a twisted pair medium. Common media of the Ethernet technology include twisted pair-based network cables such as Category 5 (Category 5) cables, Category 5e (Category 5e) cables, and Category 6 (category 6) cables. The Ethernet technology is mainly used for point-to-point communication, and also supports point-to-multipoint communication of carrier sense multiple access with collision detection (carrier sense multiple access with collision detection, CSMA/CD).

A typical point-to-multipoint communication system includes a master node and a slave node, and usually includes one master node and a plurality of slave nodes. The master node usually establishes domain information on a device connected to an uplink base router. Other secondary routers or slave routers joins the established domain information as slave nodes to form a network.

Usually, in point-to-multipoint wired communication, the master node and the slave node are directly connected through a cable. In this case, a transmission rate between nodes is an important factor that affects communication effect.

### SUMMARY

Embodiments of this application provide a communication apparatus, a communication control method, and a communication system, to improve a transmission rate between nodes.

To achieve the foregoing objective, the following technical solutions are used in this application.

According to a first aspect, an embodiment of this application provides a communication apparatus. The communication apparatus may be used in a wired communication system. For example, the communication apparatus is used in a point-to-multipoint communication system. The communication apparatus includes one or more channel groups. The channel group includes a first coupler, a plurality of first channels, and a plurality of second couplers. The first coupler includes a first end and a plurality of second ends. One ends of the plurality of first channels are correspondingly coupled to the plurality of second ends, and the other ends of the plurality of first channels are correspondingly coupled to the plurality of second couplers. The first channel includes a first branch and a second branch, where an impedance of the first branch is greater than an impedance of the second branch, and the first channel is used to select to transmit, through the first branch, a communication signal transmitted by the communication apparatus, or transmit the communication signal through the second branch.

According to the communication apparatus provided in this embodiment of this application, the first channel includes the first branch and the second branch that have the different impedances, and the first channel has a function of selecting whether the communication signal flows through the first branch or the communication signal flows through the second branch. In this case, some (one or more) first channels may select to transmit the communication signal through the first branch, and some (one or more) first channels may select to transmit the communication signal through the second branch. However, the impedance of the first branch is greater than the impedance of the second branch. Therefore, signal power allocated to the first channel on which the communication signal flows through the first branch is low, and signal power allocated to the first channel on which the communication signal flows through the second branch is high. In this way, not all first channels are allocated equal signal power, so that lower signal power can be allocated to the first channel not connected to a source node or a destination node, and higher signal power can be allocated to the first channel connected to the source node or the destination node, to improve a transmission rate of the first channel connected to the source node or the destination node, thereby increasing a transmission rate between two nodes coupled to two ends of the first channel. In addition, each first channel may dynamically switch, based on an application scenario, whether the communication signal flows through the first branch or the second branch, to implement dynamic allocation of the signal power. In this case, the first channel connected to the source node or the destination node at each moment may select the communication signal to flow through the second branch, to obtain higher signal power through allocation, so that the first channel connected to the source node or the destination node at each moment may have a higher transmission rate.

In a possible implementation, an inductive reactance of the first branch is greater than an inductive reactance of the second branch. An inductor or a ferrite bead has a feature of allowing a low frequency to pass through and blocking a high frequency. Therefore, a larger inductive reactance is set on the first branch to enable the first branch to have the larger impedance, and in a case in which the impedance of the first branch is greater than the impedance of the second branch, a low-frequency signal in the communication signal may be transmitted through the first branch in this manner. This helps a communication device perform sensing, to obtain a communication status of the first channel.

In a possible implementation, a resistance of the first branch is greater than a resistance of the second branch. In this way, a structure of the first channel is simple, and costs are low.

In a possible implementation, a capacitive reactance of the first branch is greater than a capacitive reactance of the second branch. In this way, the structure of the first channel is simple, and the costs are low.

In a possible implementation, the first branch includes a first passive circuit, the second branch includes a second passive circuit, and the first channel further includes a first switching circuit. The first passive circuit and the second passive circuit are connected in parallel, and are connected in series to the first switching circuit; and an impedance of the first passive circuit is greater than an impedance of the second passive circuit. The first switching circuit is configured to: select, based on a first control signal, the first passive circuit to communicate with the second coupler, or select, based on a first control signal, the second passive circuit to communicate with the second coupler. Passive circuits are disposed on the first branch and the second branch to adjust the impedances of the first branch and the second branch, which is simple in structure and is easy to implement.

In a possible implementation, the first branch includes a first passive circuit, the second branch includes a second passive circuit, and the first channel further includes a first switching circuit. The first passive circuit and the second passive circuit are connected in parallel, and are connected in series to the first switching circuit; and an impedance of the first passive circuit is greater than an impedance of the second passive circuit, or an inductive reactance of the first passive circuit is greater than an inductive reactance of the second passive circuit. The first switching circuit is configured to: select, based on a first control signal, the first passive circuit to communicate with the second coupler, or select, based on a first control signal, the second passive circuit to communicate with the second coupler. Passive circuits are disposed on the first branch and the second branch to adjust the impedances of the first branch and the second branch, which is simple in structure and is easy to implement.

In a possible implementation, the communication apparatus further includes a controller, and the controller is configured to output the first control signal.

In a possible implementation, the first passive circuit includes at least one of a resistor, a capacitor, an inductor, or a ferrite bead. This is an implementation with a simple structure.

In a possible implementation, the second passive circuit includes a signal line. This is an implementation with a simple structure.

In a possible implementation, the channel group further includes a second channel, the second channel includes a third coupler, and the third coupler is coupled to the first end. The third coupler is disposed in the communication apparatus, so that the communication apparatus not only has a capability of transmitting a signal from the first coupler side to the second coupler side, but also has a capability of transmitting a signal from the second coupler side to the first coupler side. In other words, the communication apparatus has a bidirectional transmission capability. In addition, because the first channel includes the first branch and the second branch that have the different impedances, by adjusting and controlling a flow path of the communication signal, the first channel connected to the source node or the destination node may have a smaller impedance, and the first channel not connected to the source node or the destination node may have a larger impedance. In this way, when the communication apparatus performs bidirectional transmission, signal power in a communication path is always the highest, and a transmission rate can be improved.

In a possible implementation, the second channel further includes a third passive circuit, a fourth passive circuit, and a second switching circuit. The third passive circuit and the fourth passive circuit are connected in parallel, and are coupled in series to the second switching circuit between the third coupler and the first end; and an impedance of the third passive circuit is greater than an impedance of the fourth passive circuit, or an inductive reactance of the third passive circuit is greater than an inductive reactance of the fourth passive circuit. The second switching circuit is configured to: select, based on a second control signal, the third passive circuit to communicate with the first end, or select, based on a second control signal, the fourth passive circuit to communicate with the first end. The third coupler, the third passive circuit, the fourth passive circuit, and the second selection circuit are disposed in the communication apparatus, so that the communication apparatus not only has the capability of transmitting the signal from the first coupler side to the second coupler side, but also has the capability of transmitting the signal from the second coupler side to the first coupler side, and further has energy of transmitting a signal from a second coupler side to another second coupler side. In addition, the first channel includes the first branch and the second branch that have the different impedances. The flow path of the communication signal is adjusted and controlled, so that the first channel connected to the source node or the destination node can have the smaller impedance, and the first channel not connected to the source node or the destination node can have the larger impedance. The second channel includes the third passive circuit and the fourth passive circuit that have the different impedances. The flow path of the communication signal is adjusted and controlled, so that when the communication signal flows through the third coupler, the second channel can have a smaller impedance, and when the communication signal does not flow through the third coupler, the second channel can have a larger impedance. In this way, when the communication apparatus performs transmission, a communication loop is always a normal loop, and another branch is always a high-impedance loop, to ensure that the signal power in the communication path is always the highest, and the transmission rate can be improved.

In a possible implementation, the first coupler further includes a third end, and the third end is coupled in series to a fifth passive circuit. This is a possible transmission manner.

In a possible implementation, the communication apparatus includes two parallel channel groups. In this way, the communication apparatus is not only applicable to a single-input single-output data transmission mode, but also applicable to a multiple-input multiple-output data transmission mode, and has a wide application scope.

In a possible implementation, the communication apparatus is integrated into an endpoint EP device, a tail end node STA device, a domain master DM device, or a central coordinator CCO device. In this way, an architecture of a communication system can be simplified.

According to a second aspect, an embodiment of this application provides a communication apparatus, including a channel group. The channel group includes a first coupler, a third channel, a fourth channel, and a plurality of second couplers. The first coupler includes a first end and a plurality of second ends. The third channel is coupled between the second end and the second coupler, the fourth channel is coupled between the second end and the second coupler, and the second end and the second coupler that are coupled to the third channel are different from the second end and the second coupler that are coupled to the fourth channel. An impedance of the third channel is greater than an impedance of the fourth channel. The communication apparatus provided in this embodiment of this application includes the third channel and the fourth channel. However, the impedances of the third channel and the fourth channel are unequal. Therefore, signal power allocated to the third channel and the fourth channel is also unequal. In a case in which transmit power is fixed, the signal power allocated to the fourth channel with the smaller impedance is higher than the signal power allocated to the third channel with the larger impedance, thereby implementing fixed allocation of the signal power. In this way, a signal transmission rate on the fourth channel can be improved.

In a possible implementation, the channel includes a sixth passive circuit, the fourth channel includes a signal line, and an impedance of the sixth passive circuit is greater than an impedance of the signal line, or an inductive reactance of the sixth passive circuit is greater than an inductive reactance of the signal line. This is an implementation with a simple structure.

In a possible implementation, the channel group further includes a third coupler, and the third coupler is coupled to the first end. The third coupler is disposed in the communication apparatus, so that the communication apparatus not only has a capability of transmitting a signal from the first coupler side to the second coupler side, but also has a capability of transmitting a signal from the second coupler side to the first coupler side. In other words, the communication apparatus has a bidirectional transmission capability.

According to a third aspect, an embodiment of this application provides a communication system. The communication system includes a first device and a plurality of second devices, and the plurality of second devices are coupled to the first device through first cables respectively. The first device includes a communication apparatus, and the communication apparatus is the communication apparatus according to either the first aspect or the second aspect.

The communication system provided in this embodiment of this application includes the communication apparatus according to the first aspect or the second aspect. Beneficial effect of the communication system is the same as beneficial effect of the communication apparatus. Details are not described herein again.

In a possible implementation, the communication system further includes a third device, and the third device is coupled to the first device through a second cable.

In a possible implementation, the communication apparatus includes two parallel channel groups, and the second device is coupled to the first device through two first cables.

According to a fourth aspect, an embodiment of this application provides a communication control method, applied to a communication apparatus, where the communication apparatus includes the communication apparatus according to any implementation of the first aspect. The communication control method includes: A communication signal received by the communication apparatus and a communication signal sent by the communication apparatus are transmitted through first channels; a first channel used to connect to a source node and a destination node selects to transmit the communication signal through a first branch; and a first channel not used to connect to the source node and the destination node selects to transmit the communication signal through a second branch.

The communication control method provided in this embodiment of this application is applied to the communication apparatus according to the first aspect. Beneficial effect of the communication control method is the same as beneficial effect of the communication apparatus. Details are not described herein again.

In a possible implementation, the communication control method further includes: The communication signal is transmitted through second channels; and the second channel selects, based on a second control signal, the communication signal to be transmitted through a third passive circuit, or selects, based on a second control signal, the communication signal to be transmitted through a fourth passive circuit.

In a possible implementation, when a second channel is used to connect to the source node or the destination node, the second control signal sent by a controller to the second channel controls a second switching circuit to select the communication signal to be transmitted through the fourth passive circuit; and when a second channel is not used to connect to the source node or the destination node, the second control signal sent by the controller to the second channel controls the second switching circuit to select the communication signal to be transmitted through the third passive circuit.

In a possible implementation, the communication control method further includes: A first coupler receives the communication signal sent by the source node, and one of a plurality of second couplers outputs the communication signal to the destination node; and the first channel used to connect to the destination node is obtained.

In a possible implementation, the communication control method further includes: One of a plurality of second couplers receives the communication signal sent by the source node, a first coupler outputs the communication signal to the destination node, and the controller obtains the first channel used to connect to the source node.

In a possible implementation, the communication control method further includes: One of a plurality of second couplers receives the communication signal, and another of the plurality of second couplers outputs the communication signal; and the controller obtains the first channel used to connect to the source node and the first channel used to connect to the destination node.

In a possible implementation, the controller senses a signal frame, and obtains the first channel used to connect to the source node and the first channel used to connect to the destination node.

According to a fifth aspect, an embodiment of this application provides a computer-readable storage medium. The computer-readable storage medium stores computer program code, and when the instructions are run on a computer, the computer is enabled to perform the communication control method according to the fourth aspect.

According to a sixth aspect, an embodiment of this application provides a computer program product. When the computer program product is run on a computer, the computer is enabled to perform the communication control method according to the fourth aspect.

### BRIEF DESCRIPTION OF DRAWINGS

FIG. 1 is a diagram of a point-to-multipoint system in one-to-many star networking according to an embodiment of this application;
FIG. 2 is a diagram of an architecture of a communication apparatus according to an embodiment of this application;
FIG. 3 is a diagram of an architecture of a communication system according to an embodiment of this application;
FIG. 4 is a schematic of a topology structure of a communication system according to an embodiment of this application;
FIG. 5 is a schematic of a topology structure of another communication system according to an embodiment of this application;
FIG. 6 is a schematic of a topology structure of still another communication system according to an embodiment of this application;
FIG. 7 is a schematic of a topology structure of yet another communication system according to an embodiment of this application;
FIG. 8 is a schematic of a topology structure of still yet another communication system according to an embodiment of this application;
FIG. 9A is a diagram of an architecture of another communication system according to an embodiment of this application;
FIG. 9B is a schematic of a topology structure of a further communication system according to an embodiment of this application;
FIG. 10A is a diagram of an architecture of still another communication system according to an embodiment of this application;
FIG. 10B is a diagram of an architecture of yet another communication system according to an embodiment of this application;
FIG. 11A is a schematic of a topology structure of a still further communication system according to an embodiment of this application;
FIG. 11B is a schematic of a topology structure of a yet further communication system according to an embodiment of this application;
FIG. 12 is a schematic of a topology structure of a communication apparatus according to an embodiment of this application;
FIG. 13 is a schematic of a topology structure of another communication apparatus according to an embodiment of this application; and
FIG. 14 is a schematic of a topology structure of still yet another communication apparatus according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

Terms such as "first" and "second" below are merely for ease of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more.

In addition, in embodiments of this application, orientation terms such as "up", "down", "left", and "right" may include but are not limited to orientations of schematically placed components in relative accompanying drawings. It should be understood that these orientation terms may be relative concepts. The orientation terms are used for relative description and clarification, and may vary correspondingly based on a change in an orientation in which the component is placed in the accompanying drawings.

In embodiments of this application, unless otherwise clearly specified and limited, a term "connection" should be understood in a broad sense. For example, the "connection" may be a fixed connection, a detachable connection, an integral connection, may be a direct connection, or an indirect connection implemented through an intermediate medium. In addition, a term "coupling" may be a direct electrical connection, or may be an indirect electrical connection through an intermediate medium. A term "contact" may be direct contact or indirect contact through an intermediate medium.

In embodiments of this application, a term "and/or" describes an association relationship between associated objects and indicates that three relationships may exist. For example, A and/or B may indicate the following cases: Only A exists, both A and B exist, and only B exists, where A and B may be singular or plural. A character "/" usually indicates an "or" relationship between the associated objects.

Before embodiments of this application are described, technical terms and background technologies in this application are described first.

Domain master (domain master, DM): usually configures a device communicating with an uplink base routing device as a domain management mode, and establishes domain information. The device communicating with the uplink base routing device may be referred to as a domain management device, and another secondary routing device or slave routing device joins the domain to form a network.

Endpoint (endpoint, EP): The another secondary routing device or slave routing device that joins the domain may be referred to as an endpoint device.

Single-input single-output (single-input single-output, SISO): is a communication manner in which a transmit antenna and a receive antenna are used at a transmit end and a receive end respectively, so that signals are transmitted and received through the antennas at the transmit end and the receive end.

Multiple-input multiple-output (multiple-input multiple-output, MIMO): is a communication manner in which a plurality of transmit antennas and a plurality of receive antennas are used at the transmit end and the receive end respectively, so that signals are transmitted and received through the plurality of antennas at the transmit end and the receive end, thereby improving communication quality.

Signal-to-noise ratio (signal-to-noise ratio, SNR): is a ratio of a signal to noise in an electronic device or an electronic system. The signal is an electronic signal that comes from the outside of the device and that needs to be processed by the device, the noise is an irregular extra signal (or information) that does not exist in an original signal that is generated after the electronic signal passes through the device, and the signal does not change as the original signal changes.

Embodiments of this application provide a communication system, to implement point-to-multipoint transmission/communication. For example, the communication system is a point-to-multipoint (point-to-multipoint, P2MP) wired communication system.

A typical P2MP communication system includes a master node and a slave node, and usually includes one master node and a plurality of slave nodes, for example, a master node domain master (domain master, domain master) and a slave node endpoint (endpoint, endpoint) defined in the G.hn protocol, or a master node central coordinator (central coordinator, central coordinator) and a slave node station (station, station) defined in the Homeplug protocol. The domain master is usually configured as a domain master DM mode in a device connected to an uplink base router, to establish domain information. Another secondary router or slave router joins the domain as an endpoint EP to form a network. Similarly, the central coordinator is configured as a central coordinator CCO mode in a device connected to an uplink base router, to establish domain information. Another secondary router or slave router joins the domain as a station STA to form a network.

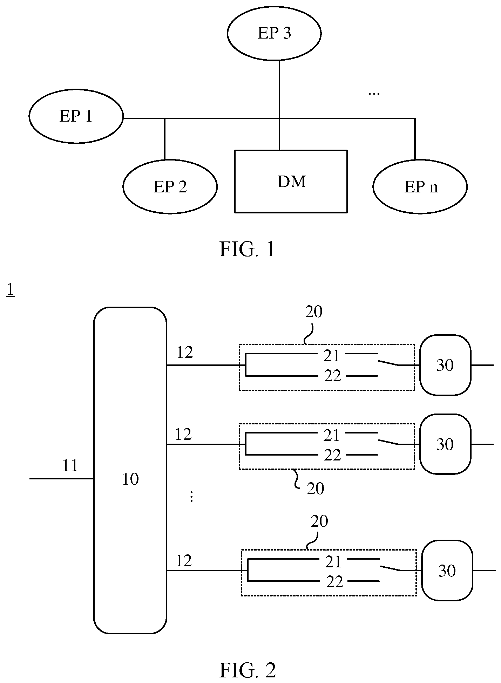

An example P2MP system is shown. As shown in FIG. 1, the P2MP system includes a domain master DM and a plurality of endpoints. In FIG. 1, an example in which the P2MP system includes an endpoint EP 1, an endpoint EP 2, an endpoint EP 3, ..., and an endpoint EP n is used for description. The domain master DM and the endpoints are directly connected through cables to form star topology networking, to implement P2MP wired communication.

For the P2MP wired communication, when a networking manner is star networking, because the P2MP communication is used, only one of the plurality of endpoints is in communication at a same moment. However, in this case, other endpoints are still used as loads and connected to a star bus. These endpoints that are used as the loads still consume energy, resulting in waste. As a result, signal strength of the endpoint that is in communication is not enough, which affects a signal-to-noise ratio (signal-noise-ratio, SNR), and finally causes a problem of a low transmission rate.

To resolve a problem in the P2MP communication that the transmission rate of the endpoint is reduced because signal power of the endpoint that is in communication currently is not enough due to energy consumption of the load connected to the star bus,
embodiments of this application provide a communication apparatus, to reallocate power consumption on the star bus, to resolve the problem of energy consumption by the load.

In some embodiments, the communication system is applicable to the Homeplug protocol, and the communication apparatus is coupled to a central coordinator CCO device and/or a tail end node STA device in the communication system.

In some other embodiments, the communication system is applicable to the Homeplug protocol, and the communication apparatus is integrated into the central coordinator CCO device and/or the tail end node STA device in the communication system.

In still some embodiments, the communication system is applicable to the G.hn protocol, and the communication apparatus is coupled to a domain master DM device and/or an endpoint EP device in the communication system.

In still some embodiments, the communication system is applicable to the G.hn protocol, and the communication apparatus is integrated into the domain master DM device and/or the endpoint EP device in the communication system.

Certainly, the communication system may also be applicable to another protocol, provided that the communication apparatus is coupled to a master node and/or a slave node in the communication system.

In embodiments of this application, an example in which the communication system includes the domain master DM device and the endpoint EP device is used for description. Certainly, the domain master DM device may be replaced with the central coordinator CCO device, and the endpoint EP device may be replaced with the tail end node STA device.

For a structure of a communication apparatus 1, as shown in FIG. 2, the communication apparatus 1 includes one or more channel groups. In FIG. 2, an example in which the communication apparatus 1 includes one channel group is used for description.

Still refer to FIG. 2. The channel group includes a first coupler 10, a plurality of first channels 20, and a plurality of second couplers 30.

In this embodiment of this application, the first coupler 10 includes a first end 11 and a plurality of second ends 12. It may be understood that, for clear description in this embodiment of this application, an example in which a cable outlet of the first end 11 faces a left side of the first coupler 10, and a cable outlet of the second end 12 faces a right side of the first coupler 10 is used for description. However, in a winding layout structure of the first coupler 10, directions of the cable outlets of the first end 11 and the second end 12 are not limited, provided that the cable outlets of the first end 11 and the second end 12 are properly disposed based on the layout structure. In the communication apparatus 1, a structure coupled to the first end 11 is different from a structure coupled to the second end 12. With reference to the following descriptions, the first end 11 and the second end 12 of the first coupler 10 may be defined through the coupled structures.

In some embodiments, a quantity of second ends 12 is the same as a quantity of first channels 20 and a quantity of second couplers 30. For example, the communication apparatus 1 includes m first channels 20, m second couplers 30, and m second ends 12.

One ends of the plurality of first channels 20 are correspondingly coupled to the plurality of second ends, and the other ends of the plurality of first channels 20 are correspondingly coupled to the plurality of second couplers 30. Alternatively, it is understood as that the plurality of first channels 20 are correspondingly coupled between the plurality of second ends 12 and the plurality of second couplers 30.

Each first channel 20 has one end and the other end, which are referred to as a first end of the first channel 20 and a second end of the first channel 20 in this example. In this case, the one ends of the plurality of first channels 20 are a plurality of first ends of the plurality of first channels 20, and the second ends of the plurality of first channels 20 are a plurality of second ends of the plurality of first channels 20. The plurality of first ends of the plurality of first channels 20 are correspondingly coupled to the plurality of second ends 12 of the first coupler 10, and the plurality of first ends of the plurality of first channels 20 are in a one-to-one correspondence with the plurality of second ends 12 of the first coupler 10. The plurality of second ends of the plurality of first channels 20 are correspondingly coupled to the plurality of second couplers 30, and the plurality of second ends of the plurality of first channels 20 are in a one-to-one correspondence with the plurality of second couplers 30. The plurality first channels 20 shown in a topology structure shown in FIG. 2 are placed in parallel. However, in an actual layout, the plurality first channels 20 are not limited to be placed in parallel, provided that the plurality first channels 20 are properly placed based on a requirement.

In some embodiments, the first channel 20 includes a first branch 21 and a second branch 22, and an impedance of the first branch 21 is greater than an impedance of the second branch 22.

The impedance is a physical quantity that indicates performance of an element or electrical performance of a circuit. The impedance is a ratio of a peak voltage (or valid value) Um at two ends of a passive circuit in an alternating current circuit to a peak current (or valid value) Im passing through the circuit, and the impedance is indicated by z and a unit is ohm (Ω). When a value of U is fixed, a larger value of z indicates a smaller value of I, and the impedance limits the current. The impedance (electrical impedance), also referred to as an electrical impedance, and is a collective name of blocking effect of a resistor, an inductor, and a capacitor on an alternating current in the circuit. The impedance is a complex number. A real part is referred to as a resistance, and an imaginary part is referred to as a reactance. The blocking effect of the capacitor on the alternating current in the circuit is referred to as a capacitive reactance, the blocking effect of the inductor on the alternating current in the circuit is referred to as an inductive reactance, and the capacitive reactance and the inductive reactance are collectively referred to as the reactance.

In this embodiment of this application, the impedance of the first branch 21 may be an impedance between the first coupler 10 and the second coupler 30. Similarly, the impedance of the second branch 22 may be an impedance between the first coupler 10 and the second coupler 30.

In some embodiments, the impedance of the first branch 21 is far greater than the impedance of the second branch 22. For example, the first branch 21 is a high-impedance branch, and the second branch 22 is a signal line straight-through path. Alternatively, for example, the impedance of the first branch 21 is more than five times the impedance of the second branch 22. For example, the impedance of the first branch 21 is 10 times, 15 times, 20 times, 30 times, 50 times, and above the impedance of the second branch 22.

In some other embodiments, an inductive reactance of the first branch 21 is greater than an inductive reactance of the second branch 22.

The first channel 20 is used to select to transmit, through the first branch 21, a communication signal transmitted by the communication apparatus 1, or transmit the communication signal through the second branch 22.

In other words, in this embodiment of this application, for the first channel 20, the communication signal is transmitted either through the first branch 21 or through the second branch 22. For example, for the first channel 20 connected to a source node or a destination node, the communication signal is transmitted through the second branch 22. For the first channel 20 not connected to the source node or the destination node, the communication signal is transmitted through the first branch 21.

Certainly, a flow direction of the signal is not limited in this embodiment of this application. For example, the communication signal may be output after flowing to the second coupler 30 through the first channel 20, or the second coupler 30 may receive the communication signal and transmit the communication signal in a direction away from the second coupler 30 through the first channel 20.

According to the communication apparatus 1 provided in this embodiment of this application, the first channel 20 includes the first branch 21 and the second branch 22 that have the different impedances, and the first channel 20 has a function of selecting whether the communication signal flows through the first branch 21 or the communication signal flows through the second branch 22. In this case, some (one or more) first channels 20 may select to transmit the communication signal through the first branch 21, and some (one or more) first channels 20 may select to transmit the communication signal through the second branch 22. However, the impedance of the first branch 21 is greater than the impedance of the second branch 22. Therefore, signal power allocated to the first channel 20 on which the communication signal flows through the first branch 21 is low, and signal power allocated to the first channel 20 on which the communication signal flows through the second branch 22 is high. In this way, not all first channels 20 are allocated equal signal power, so that lower signal power can be allocated to the first channel 20 not connected to the source node or the destination node, and higher signal power can be allocated to the first channel 20 connected to the source node or the destination node, to improve a transmission rate of the first channel 20 connected to the source node or the destination node, thereby increasing a transmission rate between two nodes coupled to two ends of the first channel 20. In addition, each first channel 20 may dynamically switch, based on an application scenario, whether the communication signal flows through the first branch 21 or the second branch 22. In this case, the first channel 20 connected to the source node or the destination node at each moment may select the communication signal to flow through the second branch 22, to obtain higher signal power through allocation, so that the first channel 20 connected to the source node or the destination node at each moment may have a higher transmission rate.

The following uses several examples to schematically describe the communication apparatus, a communication control method of the communication apparatus, and a communication system to which the communication apparatus is applied that are provided in embodiments of this application.

### Example 1

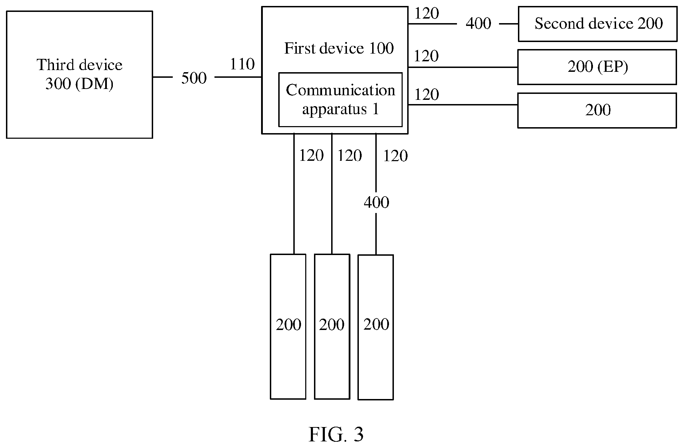

As shown in FIG. 3, an embodiment of this application provides a communication system. The communication system includes a first device 100, a plurality of second devices 200, and a third device 300.

The communication system provided in this embodiment of this application may be, for example, a P2MP communication system or another wired communication system, for example, a wired communication system based on a network cable, a twisted pair, a power line, and a direct current power supply cable.

The first device 100 has a first port 110 and a plurality of second ports 120, and the plurality of second devices 200 are coupled to the first device 100 through first cables 400 respectively. In other words, the plurality of second devices 200 are correspondingly coupled to the plurality of second ports 120 through a plurality of first cables 400, and the second devices 200 are in a one-to-one correspondence with the second ports 120.

Certainly, the first device 100 may further include a port used for another function. This is not limited in this embodiment of this application. This embodiment of this application merely shows the first port 110 and the second port 120.

The third device 300 is coupled to the first port 110 of the first device 100 through a second cable 500.

In the communication system shown in FIG. 3, the first device 100 may be understood as an intermediate transmission medium, and the third device 300 completes communication with the second device 200 through the first device 100.

The first cable 400 and the second cable 500 may be, for example, a power line, a network cable, a twisted pair, or a direct current power supply cable.

In some embodiments, the third device 300 is a domain master DM device, and the second device 200 is an endpoint EP device. The domain master DM described below may be understood as the domain master DM device in the communication system. The endpoint EP may be understood as the endpoint EP device in the communication system.

In some embodiments, the first device 100 includes a communication apparatus 1 provided in this embodiment of this application. The communication apparatus 1 reallocates signal power on a communication path, to increase a transmission rate of the second device 200 that is in communication.

In terms of a structure of the communication apparatus 1, in some embodiments, the communication apparatus 1 uses a single-input single-output (single-input single-output, SISO) data transmission mode.

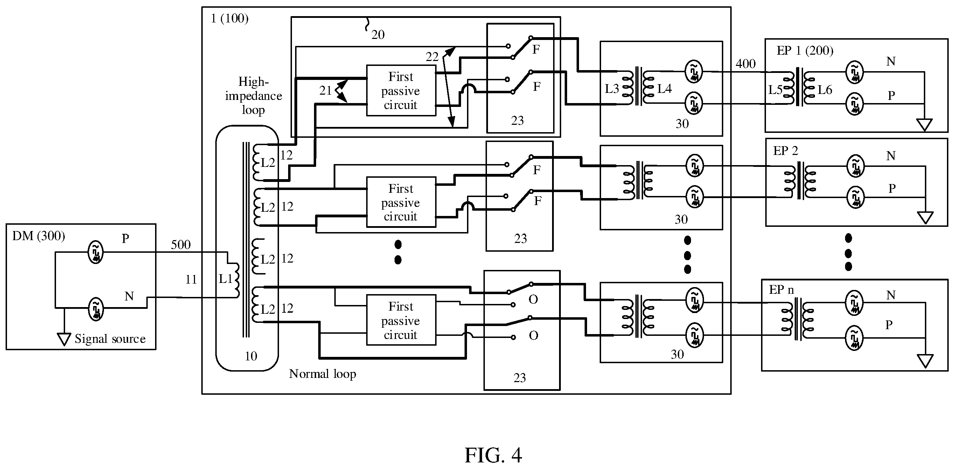

As shown in FIG. 4, the communication apparatus 1 includes a channel group. The channel group includes a first coupler 10, a plurality of first channels 20, and a plurality of second couplers 30.

The first coupler 10 includes a first end 11 and a plurality of second ends 12. One ends of the plurality of first channels 20 are correspondingly coupled to the plurality of second ends, and the other ends of the plurality of first channels 20 are correspondingly coupled to the plurality of second couplers 30.

For example, the first coupler 10 is a combiner, and the first coupler 10 is configured to convert one path of signal into a plurality of paths of signals. For example, the first coupler 10 includes a first coil L1 and a plurality of second coils L2, two ends of the first coil L1 are coupled to the first end 11 of the first combiner 10, and two ends of the second coil L2 are coupled to the second end 12 of the first combiner 10. The first coil L1 is magnetically coupled to the second coil L2, and the plurality of second coils L2 may also be electromagnetically coupled to each other. In some embodiments, a quantity of turns of the first coil L1 is different from a quantity of turns of the second coil L2, and a signal amplitude can be amplified or reduced by adjusting a ratio of the quantity of turns of the first coil L1 to the quantity of turns of the second coil L2.

For example, the second coupler 30 includes a third coil L3 and a fourth coil L4 that are magnetically coupled, two ends of the third coil L3 are coupled to the first channel 20, and two ends of the fourth coil L4 are coupled to an external port of the communication apparatus 1. The second coupler 30 is configured to couple a received signal to the first cable 400 for transmission.

The first channel 20 includes a first branch 21 and a second branch 22, and an impedance of the first branch 21 is greater than an impedance of the second branch 22. The first channel 20 is used to select to transmit, through the first branch 21, a communication signal transmitted by the communication apparatus 1, or transmit the communication signal through the second branch 22.

Therefore, the first branch 21 presents a high resistance to the communication signal, and the second branch 22 presents a low resistance to the communication signal. Alternatively, the signal transmitted by the communication apparatus 1 is a broadband signal, and the first branch 21 has different passage and resistance degrees for different frequency bandwidths. For example, the first branch 21 presents the high resistance to signals of some frequency bandwidths, and presents the low resistance to signals of some frequency bandwidths.

In some embodiments, an inductive reactance of the first branch 21 is greater than an inductive reactance of the second branch 22.

An inductor or a ferrite bead has a feature of allowing a low frequency to pass through and blocking a high frequency. Therefore, a larger inductive reactance is set on the first branch 21 to enable the first branch 21 to have the larger impedance, and in a case in which the impedance of the first branch 21 is greater than the impedance of the second branch 22, a low-frequency signal in the communication signal may be transmitted through the first branch 21 in this manner. This helps a communication device perform sensing, to obtain a communication status of the first channel 20.

In some embodiments, a resistance of the first branch 21 is greater than a resistance of the second branch 22. In this way, a structure of the first channel 20 is simple, and costs are low.

In some embodiments, a capacitive reactance of the first branch 21 is greater than a capacitive reactance of the second branch 22. In this way, the structure of the first channel 20 is simple, and the costs are low.

In terms of the structure of the first channel 20, in some embodiments, the first branch 21 includes a first passive circuit, the second branch 22 includes a second passive circuit, and the first channel 20 further includes a first switching circuit 23.

The first passive circuit and the second passive circuit are connected in parallel, and are connected in series to the first switching circuit 23; and an impedance of the first passive circuit is greater than an impedance of the second passive circuit.

In some embodiments, the first passive circuit includes one or more of, for example, a resistor, an inductor, a ferrite bead, and a capacitor.

In some embodiments, the second passive circuit includes one or more of, for example, the resistor, the inductor, the ferrite bead, and the capacitor.

Types of passive components included in the first passive circuit and the second passive circuit may be the same, provided that the impedance of the first passive circuit is greater than the impedance of the second passive circuit.

For example, the first passive circuit and the second passive circuit each include a resistor, and a resistance value of a first resistor included in the first passive circuit is greater than a resistance value of a second resistor included in the second passive circuit.

In some other embodiments, the second passive circuit includes a signal line, and the second passive circuit is a straight-through path (or referred to as a signal normal loop).

In this embodiment of this application, an example in which the first branch 21 includes the first passive circuit, the first branch 21 is a signal high-impedance path, the second branch 22 includes a signal line, and the second branch 22 is a signal low-impedance path is used for description.

In some embodiments, an inductive reactance of the first passive circuit is greater than an inductive reactance of the second passive circuit.

For example, the first passive circuit and the second passive circuit each include only an inductor, or the first passive circuit includes an inductor, and the second passive circuit includes a signal line.

In this embodiment of this application, the first switching circuit 23 is configured to: select, based on a first control signal, the first passive circuit to communicate with the second coupler 30, or select, based on a first control signal, the second passive circuit to communicate with the second coupler 30.

For example, the first switching circuit 23 includes a two-input one-output selector switch, where a fixed end of the selector switch is coupled to the second device 30, a selection end of the selector switch is coupled to the first passive circuit or the second passive circuit, and a control end of the selector switch is configured to receive the first control signal.

For example, if the first control signal controls the selector switch to be in an off state F, the communication signal flows in the first branch 21. In this case, a corresponding loop is referred to as a high-impedance loop. If the first control signal controls the selector switch to be in the on state O, the communication signal flows in the second branch 22. In this case, a corresponding loop is referred to as a normal loop.

Certainly, the communication signal may alternatively flow in the first branch 21 when the first control signal controls the selector switch to be in the on state O. The communication signal may alternatively flow in the second branch 22 when the first control signal controls the selector switch to be in the off state F.

Alternatively, for example, the first switching circuit 23 is a three-input one-output selector switch, and the selection end of the selector switch may further choose to communicate with another device (for example, the Ethernet), to transmit a communication signal of the another device to the second device 200.

Certainly, that the first switching circuit 23 is connected in series to the first passive circuit (or the second passive circuit) may be shown in FIG. 4. The first switching circuit 23 is coupled to the second end 12 of the first coupler 10, and the first passive circuit is coupled to the second coupler 30. Alternatively, the first switching circuit 23 may be coupled to the second coupler, and the first passive circuit may be coupled to the second end 12 of the first coupler 10.

In some embodiments, the communication apparatus 1 further includes a controller, and the controller is configured to output the first control signal.

When the communication apparatus 1 is used in the communication system, the third device 300 sends a communication signal (for example, a signal source generated by a demodulation chip). The signal source may be, for example, differential signals, including a differential signal P and a differential signal N. The differential signal P and the differential signal N are a pair of differential signals having a same frequency and opposite phases. The communication signal sent by the third device 300 is transmitted to the communication apparatus 1 through the second cable 500. The first coupler 10 couples the communication signal to each second coupler 30, and then the second coupler 30 transmits the communication signal to the second device 200 through the first cable 400, to complete signal transmission.

The second device 200 includes, for example, a transformer. The second device 200 includes a fifth coil L5 and a sixth coil L6 that are magnetically coupled. Two ends of the fifth coil L5 are coupled to the first cable 400, to couple the communication signal output by the communication apparatus 1 to the sixth coil L6.

The following schematically describes the communication control method provided in this embodiment of this application.

An embodiment of this application provides a communication control method. For example, the communication control method may be applied to the communication apparatus 1.

The communication control method includes:
A communication signal received by the communication apparatus 1 and a communication signal sent by the communication apparatus 1 are transmitted through the first channel 20; the first channel 20 used to connect to a source node or a destination node selects to transmit the communication signal through the first branch 21; and the first channel 20 not used to connect to the source node or the destination node selects to transmit the communication signal through the second branch 22.

The first channel 20 used to connect to the source node or the destination node is referred to as the first channel 20 that is in communication currently, and the first channel 20 that is in communication currently selects to transmit the communication signal through the first branch 21. The first channel 20 not used to connect to the source node or the destination node is referred to as the first channel 20 that is not in communication, and the first channel 20 that is not in communication selects to transmit the communication signal through the second branch 22. Not in communication herein does not mean that no communication signal is transmitted, but that the communication signal is not transmitted to the source node or the destination node.

In some embodiments, the communication apparatus 1 further includes a second channel, and the communication control method further includes:
The communication signal is transmitted through the second channel 40; and the second channel 40 selects, based on a second control signal, the communication signal to be transmitted through a third passive circuit 42, or selects, based on a second control signal, the communication signal to be transmitted through a fourth passive circuit 43.

For example, when the second channel 40 is used to connect to the source node or the destination node, the second control signal sent by the controller to the second channel 40 controls a second switching circuit 44 to select the communication signal to be transmitted through the fourth passive circuit 43.

In other words, when the communication signal needs to be transmitted to the source node or the destination node through the second channel 40, the fourth passive circuit 43 in the second channel 40 transmits the communication signal.

When the second channel 40 is not used to connect to the source node or the destination node, the second control signal sent by the controller to the second channel 40 controls the second switching circuit 44 to select the communication signal to be transmitted through the third passive circuit 42.

In other words, when the communication signal does not need to be transmitted to the source node or the destination node through the second channel 40, the third passive circuit 42 in the second channel 40 transmits the communication signal.

In some embodiments, the third device 300 is used as the source node (source id, SID), the second device 200 is used as the destination node (destination id, DID, or may be a target node), and the communication signal flows from a side on which the first coupler 10 is located to a side on which the second coupler 30 is located.

For example, the first coupler 10 receives the communication signal sent by the source node, and one of the plurality of second couplers 30 outputs the communication signal to the destination node. The first channel 20 used to connect to the destination node is obtained.

For example, the third device 300 is used as the source node, a second device 200 is used as the destination node, and other second devices are used as sensing nodes. The first coupler 10 receives the communication signal sent by the third device 300, and couples the communication signal to the plurality of first channels 20. The first channel 20 that is in communication with the destination node is the first channel 20 that is in communication, and the first channel 20 that is in communication with the sensing node is the first channel 20 that is not in communication.

The first channel 20 that is in the plurality of first channels 20 and that is in communication transmits the communication signal to the second coupler 30 through the second branch 22, and the first channel 20 that is in the plurality of first channels 20 and that is not in communication transmits the communication signal to the second coupler 30 through the first branch 21. Each second coupler 30 outputs the communication signal received by the second coupler 30 as an output of the communication apparatus 1, and transmits the communication signal to the second device 200.

The P2MP communication system belongs to a point-to-multipoint communication system based on a time division duplex (time division duplex, TDD) technology. For the second device 200 (for example, the endpoint EP), at a same moment, only one of the plurality of second devices 200 exchanges data with the third device 300 (for example, the domain master DM). In this case, the other second devices 200 are in a sensing state (reading a frame header of a data frame to determine whether the frame data is sent to the other second devices 200). Therefore, the second device 200 that exchanges data with the third device 300 is referred to as the destination node in a communication state, and the other second devices 200 are referred to as the sensing nodes in the sensing state.

When the third device 300 is used as the source node and the second device 200 is used as the destination node, the source node, the destination node, and the sensing node is known in the communication system. Therefore, the controller may directly know the first channel 20 that is in communication and the first channel 20 that is not in communication.

In some embodiments, the communication control method includes:
A correspondence between the second device 200 and the first channel 20 in the communication apparatus 1 is obtained.

Alternatively, it is understood as that a correspondence between the second device 200 and the communication apparatus 1 is obtained by learning that the second device 200 is coupled to the first channel 20 through the first cable 400.

The second device 200 that is used as the destination node and the second device 200 that is used as the sensing node are known. Therefore, after the correspondence between the second device 200 and the first channel 20 is obtained, the first channel 20 that is in the communication state may be learned of, and the communication signal needs to flow through the second branch 22. The first channel 20 that is not in the communication state may be learned of, and the communication signal needs to flow through the first branch 21.

In this case, the controller sends the first control signal to each of the plurality of first channels 20, and the first control signal sent by the controller to the first channel 20 connected to the source node or the destination node controls the first switching circuit 23 to select the communication signal to be transmitted through the second branch 22. The first control signal sent by the controller to the first channel 20 not connected to the source node controls the first switching circuit 23 to select the communication signal to be transmitted through the first branch 21, so that the first coupler 10 receives the communication signal, and the second coupler 30 outputs the communication signal.

As shown in FIG. 4, an n^{th} endpoint EP n is used as the destination node, and other endpoints are used as the sensing nodes. In the first channel 20 coupled to the endpoint (a first endpoint EP 1 and a second endpoint EP 2 shown in FIG. 4) other than the n^{th} endpoint EP n, a bolded part indicates a current return path from the first coupler 10 to the second coupler 30, under control of the first control signal, a switching switch in the first switching circuit 23 is in the off state F, and the switching switch is coupled to the first branch 21. The entire current loop needs to flow through a high-impedance first passive circuit. An impedance of the entire current loop is very large, and is the high-impedance loop. A current I1 of the entire loop is large.

In the first channel 20 coupled to the n^{th} endpoint EP n, a bolded part indicates a current return path from the first coupler 10 to the second coupler 30, under the control of the first control signal, the switching switch in the first switching circuit 23 is in the on state O, and the switching switch is coupled to the second branch 22. The entire current loop flows through a low-resistance signal line (or second passive circuit). An impedance of the entire current loop is very small, and is the normal loop. A current I2 of the entire loop is large, and the current 12 of the normal loop is far greater than the current I1 of the high-resistance loop. In this way, in a process of transmitting the communication signal, most signal power is allocated to the normal loop, so that a transmission rate of the loop that is in communication can be improved.

In some other embodiments, the second device 200 is used as the source node, the third device 300 is used as the destination node, and a communication signal flows from the side on which the second coupler 30 is located to the side on which the first coupler 10 is located.

For example, one of a plurality of second couplers 30 receives the communication signal sent by the source node, a first coupler 10 outputs the communication signal to the destination node, and the controller obtains the first channel 20 used to connect to the source node.

For example, the controller senses a signal frame, and may learn of the source node and the destination node by demodulating a frame header (header), to learn of a correspondence between the second coupler 30 configured to be coupled to the source node and the first channel 20, and determine the first channel 20 connected to the source node (the first channel 20 that is in communication currently) and the first channel 20 not connected to the source node (the first channel 20 that is not in communication currently).

The first control signal sent by the controller to the first channel 20 connected to the source node or the destination node controls the first switching circuit 23 to select the communication signal to be transmitted through the second branch 22. The first control signal sent by the controller to the first channel 20 not connected to the source node controls the first switching circuit 23 to select the communication signal to be transmitted through the first branch 21.

For example, as shown in FIG. 4, the n^{th} endpoint EP n is used as the source node, the other endpoints are used as the sensing nodes, and the domain master DM is used as the destination node. In the first channel 20 coupled to the endpoint (the endpoints used as the sensing nodes, namely, the first endpoint EP 1 and the second endpoint EP 2 shown in FIG. 4) other than the n^{th} endpoint EP n, the bolded part indicates the current return path from the second coupler 30 to the first coupler 10, under the control of the first control signal, the switching switch in the first switching circuit 23 is in the off state F, and the switching switch is coupled to the first branch 21. The entire current loop needs to flow through the high-impedance first passive circuit. The impedance of the entire current loop is very large, and is the high-impedance loop. Therefore, signal power in the endpoints used as the sensing nodes is almost not transmitted to the domain master DM.

In the first channel 20 coupled to the n^{th} endpoint EP n, the bolded part indicates the current return path from the first coupler 10 to the second coupler 30, under the control of the first control signal, the switching switch in the first switching circuit 23 is in the on state O, and the switching switch is coupled to the second branch 22. The entire current loop flows through the low-resistance signal line (or second passive circuit). The impedance of the entire current loop is very small, and is the normal loop. Therefore, most signal power sent by the n^{th} endpoint EP n used as the source point may be transmitted to the domain master DM.

After the execution, the channel changes, the domain master DM or the endpoint is used as a receive end, channel estimation may be performed again based on an additional channel estimation (additional channel estimation, ACE) symbol, a payload (payload) symbol in a frame structure is demodulated to obtain data, and the branch is dynamically switched again.

According to the communication apparatus 1 provided in this embodiment of this application, the first channel 20 includes the first branch 21 and the second branch 22 that have the different impedances, and the first channel 20 has a function of selecting whether the communication signal flows through the first branch 21 or the communication signal flows through the second branch 22. In this case, some (one or more) first channels 20 may select to transmit the communication signal through the first branch 21, and some (one or more) first channels 20 may select to transmit the communication signal through the second branch 22. However, the impedance of the first branch 21 is greater than the impedance of the second branch 22. Therefore, signal power allocated to the first channel 20 on which the communication signal flows through the first branch 21 is low, and signal power allocated to the first channel 20 on which the communication signal flows through the second branch 22 is high. In this way, not all first channels 20 are allocated equal signal power, so that lower signal power can be allocated to the first channel 20 not connected to the source node or the destination node, and higher signal power can be allocated to the first channel 20 connected to the source node or the destination node, to improve a transmission rate of the first channel 20 connected to the source node or the destination node, thereby increasing a transmission rate between two nodes coupled to two ends of the first channel 20. In addition, each first channel 20 may dynamically switch, based on an application scenario, whether the communication signal flows through the first branch 21 or the second branch 22, to implement dynamic allocation of the signal power. In this case, the first channel 20 connected to the source node or the destination node at each moment may select the communication signal to flow through the second branch 22, to obtain higher signal power through allocation, so that the first channel 20 connected to the source node or the destination node at each moment may have a higher transmission rate.

### Example 2

An architecture of a communication system in Example 2 is the same as that in Example 1, and a main difference lies in the structure of the communication apparatus 1 in the first device 100.

An embodiment of this application provides a communication system. The communication system includes a first device 100, a plurality of second devices 200, and a third device 300.

For a coupling relationship among the first device 100, the second device 200, and the third device 300, refer to the related descriptions in Example 1. Details are not described herein again.

The first device 100 includes a communication apparatus 1 provided in this embodiment of this application. The communication apparatus 1 reallocates signal power on a communication path, to increase a transmission rate of the second device 200 that is in communication.

In terms of a structure of the communication apparatus 1, in some embodiments, the communication apparatus 1 uses a single-input single-output SISO data transmission mode.

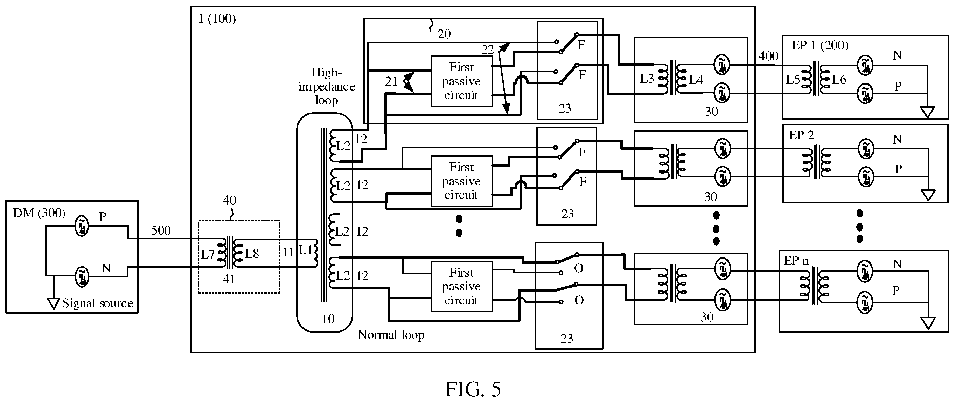

As shown in FIG. 5, the communication apparatus 1 includes a channel group. The channel group includes a first coupler 10, a plurality of first channels 20, a plurality of second couplers 30, and a third coupler 41.

Structures and coupling manners of the first coupler 10, the plurality of first channels 20, and the plurality of second couplers 30 are the same as those in Example 1. Details are not described herein again. In this example, the third coupler 41 is mainly described.

As shown in FIG. 5, the channel group further includes a second channel 40. The second channel 40 includes the third coupler 41, one end of the third coupler 41 is coupled to a first end 11 of the first coupler 10, and the other end of the third coupler 41 is coupled to an external port of the communication apparatus 1.

In this example, a structure of the first channel 20 is different from a structure of the second channel 40. Therefore, the first end 11 and the second end 12 of the first coupler 10 may be distinguished by determining circuit structures to which the ports of the first coupler 10 are coupled.

For example, the third coupler 41 includes a transformer. The transformer includes a seventh coil L7 and an eighth coil L8 that are magnetically coupled. Two ends of the seventh coil L7 are coupled to the external port of the communication apparatus 1, and two ends of the eighth coil L8 are coupled to the first end 11 of the first coupler 10.

In this way, a communication signal output by the third device 300 may be coupled to the first coupler 10 through the third coupler 41, and then coupled and transmitted to the second device 200. A signal output by the second device 200 may also be coupled to the first coupler 10 through the second coupler 30, and then coupled and transmitted to the third device 300.

In other words, when the communication apparatus 1 provided in this embodiment of this application is used in the communication system, the communication system can implement bidirectional transmission. In other words, the third device 300 can send the signal to the second device 200, and the second device 200 can send the signal to the third device 300.

Based on this, the communication control method provided in this embodiment of this application includes:

The third device 300 is used as a source node, the second device 200 is used as a destination node, and the communication signal flows from a side on which the third coupler 41 is located to a side on which the second coupler 30 is located.

For example, the third coupler 41 receives a communication signal sent by the third device 300, and couples the communication signal to the first coupler 10. The first coupler receives the communication signal, and outputs the communication signal through the second coupler 30.

The third coupler 41 communicates with the third device 300 through a second cable 500, and the communication signal output by the third device 300 may be transmitted to the third coupler 41. The communication signal received by the first coupler 10 is the communication signal coupled by the third coupler 41. A process in which the first coupler 10 receives the communication signal and outputs the communication signal through the second coupler 30 is the same as that in Example 1. Details are not described herein again.

In other words, in a communication process in which the third device 300 sends the signal to the second device 200, compared with Example 1, this example includes a coupling process of the third coupler 41, and other communication processes are similar.

Because the communication apparatus provided in this example has a bidirectional communication function, in addition to using the third device 300 as the source node and using the second device 200 as the destination node, the second device 200 may be used as the source node and the third device 300 may be used as the destination node. In this case, the source node and the destination node need to be obtained first.

The communication control method provided in this embodiment of this application is the same as that in Example 1. Refer to the related descriptions.

For example, as shown in FIG. 5, an n^{th} endpoint EP n is used as the source node, other endpoints are used as sensing nodes, and a domain master DM is used as the destination node. In the first channel 20 coupled to the endpoint (the endpoints used as the sensing nodes, namely, a first endpoint EP 1 and a second endpoint EP 2 shown in FIG. 5) other than the n^{th} endpoint EP n, a bolded part indicates a current return path from the second coupler 30 to the first coupler 10, under control of a first control signal, a switching switch in a first switching circuit 23 is in an off state F, and the switching switch is coupled to a first branch 21. The entire current loop needs to flow through a high-impedance first passive circuit. An impedance of the entire current loop is very large, and is a high-impedance loop. Therefore, signal power in the endpoints used as the sensing nodes is almost not transmitted to the domain master DM.

In the first channel 20 coupled to the n^{th} endpoint EP n, a bolded part indicates a current return path from the first coupler 10 to the second coupler 30, under the control of the first control signal, the switching switch in the first switching circuit 23 is in an on state O, and the switching switch is coupled to a second branch 22. The entire current loop flows through a low-resistance signal line (or second passive circuit). An impedance of the entire current loop is very small, and is a normal loop. Therefore, most signal power sent by the n^{th} endpoint EP n used as the source point may be transmitted to the domain master DM.

According to the communication apparatus 1 provided in this embodiment of this application, the third coupler 41 is disposed in the communication apparatus 1, so that the communication apparatus 1 not only has a capability of transmitting the signal from the first coupler 10 side to the second coupler 30 side, but also has a capability of transmitting the signal from the second coupler 30 side to the first coupler 10 side. In other words, the communication apparatus 1 has a bidirectional transmission capability. In addition, because the first channel 20 includes the first branch 21 and the second branch 22 that have different impedances, by adjusting and controlling a flow path of the communication signal, the first channel 20 connected to the source node or the destination node may have a smaller impedance, and the first channel 20 not connected to the source node or the destination node may have a larger impedance. In this way, when the communication apparatus 1 performs bidirectional transmission, signal power in the communication path is always the highest, and a transmission rate can be improved.

### Example 3

An architecture of a communication system in Example 3 is the same as that in Example 2, and a main difference lies in the structure of the communication apparatus 1 in the first device 100.

An embodiment of this application provides a communication system. The communication system includes a first device 100, a plurality of second devices 200, and a third device 300.

For a coupling relationship among the first device 100, the second device 200, and the third device 300, refer to the related descriptions in Example 1. Details are not described herein again.

The first device 100 includes a communication apparatus 1 provided in this embodiment of this application. The communication apparatus 1 reallocates signal power on a communication path, to increase a transmission rate of the second device 200 that is in communication.

In terms of a structure of the communication apparatus 1, in some embodiments, the communication apparatus 1 uses a single-input single-output SISO data transmission mode.

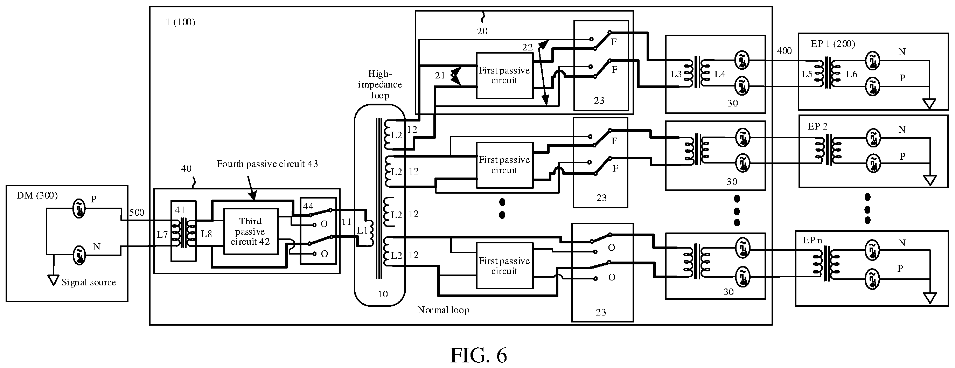

As shown in FIG. 6, the communication apparatus 1 includes a channel group. The channel group includes a first coupler 10, a plurality of first channels 20, a plurality of second couplers 30, a third coupler 41, a third passive circuit 42, a fourth passive circuit 43, and a second switching circuit 44.

Structures and coupling manners of the first coupler 10, the plurality of first channels 20, the plurality of second couplers 30, and the third coupler 41 are the same as those in Example 2. Details are not described herein again. In this example, the third passive circuit 42, the fourth passive circuit 43, and the second switching circuit 44 are mainly described.

As shown in FIG. 6, the channel group further includes a second channel 40. The second channel 40 includes the third coupler 41, the third passive circuit 42, the fourth passive circuit 43, and the second switching circuit 44.

One end of the third coupler 41 is coupled to a first end 11 of the first coupler 10, and the other end of the third coupler 41 is coupled to an external port of the communication apparatus 1. A structure of the third coupler 41 may be the same as the structure of the third coupler 41 in Example 2. Details are not described herein again.

In this embodiment of this application, an impedance of the third passive circuit 42 is greater than an impedance of the fourth passive circuit 43.

In some embodiments, the third passive circuit 42 may include one or more of, for example, a resistor, an inductor, a ferrite bead, and a capacitor.

In some embodiments, the fourth passive circuit 43 may include one or more of, for example, the resistor, the inductor, the ferrite bead, and the capacitor.

Types of passive components included in the third passive circuit 42 and the fourth passive circuit 43 may be the same, provided that the impedance of the third passive circuit 42 is greater than the impedance of the fourth passive circuit 43.

For example, the third passive circuit 42 and the fourth passive circuit 43 each include a resistor, and a resistance value of a third resistor included in the third passive circuit 42 is greater than a resistance value of a fourth resistor included in the fourth passive circuit 43.

In some other embodiments, the fourth passive circuit 43 includes a signal line, and the fourth passive circuit 43 is a straight-through path (or referred to as a signal normal loop). In FIG. 6, an example in which the fourth passive circuit 43 includes a signal line is used for description.

In this embodiment of this application, an inductive reactance of the third passive circuit 42 may alternatively be greater than an inductive reactance of the fourth passive circuit 43.

The third passive circuit 42 and the fourth passive circuit 43 are connected in parallel, and are coupled in series to the second switching circuit 44 between the third coupler 41 and the first end 11 of the first coupler 10.

The third passive circuit 42 (or the fourth passive circuit 43) is connected in series to the second switching circuit 44. In FIG. 6, an example in which the second switching circuit 44 is disposed close to the first end 11 is used for description, or the second switching circuit 44 may alternatively be disposed close to the third coupler 41.

The second switching circuit 44 is configured to: select, based on a second control signal, the third passive circuit 42 to communicate with the first end 11, or select, based on a second control signal, the fourth passive circuit 43 to communicate with the first end 11.

For example, the second control signal may be output through a controller in the communication apparatus 1, and the controller may output a corresponding second control signal based on an obtained source node and an obtained destination node.

For example, a structure of the second switching circuit 44 may be the same as a structure of a first switching circuit 23, and a control process of the second switching circuit 44 may also be the same as the control process of the first switching circuit 23.

In this example, if a structure of the first channel 20 is different from a structure of the second channel 40 (for example, structures of components and a coupling relationship between the components), the first end 11 and a second end 12 of the first coupler 10 may be distinguished by determining circuit structures to which the ports of the first coupler 10 are coupled. If the structure of the first channel 20 is the same as the structure of the second channel 40, any one of the plurality of ports of the first coupler 10 may be used as the first end 11 or the second end 12.

When the communication apparatus 1 provided in this embodiment of this application is used in the communication system, the communication system can implement signal transmission on three transmission paths. In other words, the third device 300 can send a signal to the second device 200, the second device 200 can send a signal to the third device 300, and the second device 200 can send a signal to the second device 200.

With reference to the communication control method provided in this embodiment of this application, the following schematically describes a communication process of the communication apparatus 1 provided in this embodiment of this application.

The communication control method provided in this embodiment of this application includes:
The third device 300 is used as a source node, the second device 200 is used as a destination node, and a communication signal flows from a side on which the third coupler 41 is located to a side on which the second coupler 30 is located.

For example, the third coupler 41 receives the communication signal sent by the third device 300, and couples the communication signal to the first coupler 10. The first coupler receives the communication signal, and outputs the communication signal through the second coupler 30.

The third coupler 41 communicates with the third device 300 through a second cable 500, and the communication signal output by the third device 300 may be transmitted to the third coupler 41.

The third coupler 41 sends the communication signal to the first coupler 10 through the second channel 40. In the second channel 40, a bolded part indicates a current loop path from the third coupler 41 to the first coupler 10. Under control of the second control signal, a switching switch in the second switching circuit 44 is in an on state O, and the switching switch is coupled to the fourth passive circuit 43. An impedance of the entire current loop is small, and is a normal loop. Therefore, most signal power transmitted by the third coupler 41 is transmitted to the first coupler 10.

In FIG. 6, an example in which an n^{th} endpoint EP n is used as the destination node is used for description. A process in which the first coupler 10 receives the communication signal and outputs the communication signal through the second coupler 30 is the same as that in Example 1. Details are not described herein again.

The communication control method provided in this embodiment of this application further includes:
The second device 200 is used as the source node, and the third device 300 is used as the destination node. A communication signal flows from the side on which the second coupler 30 is located to the side on which the third coupler 41 is located.

In FIG. 6, an example in which the n^{th} endpoint EP n is used as the source node is used for description. A process in which the second coupler 30 receives the communication signal and transmits the communication signal to the first coupler 10 is the same as that in Example 2. Details are not described herein again.

Still refer to FIG. 6. The first coupler 10 sends the communication signal to the third coupler 41 through the second channel 40. In the second channel 40, the bolded part indicates the current loop path from the first coupler 10 to the third coupler 41. Under the control of the second control signal, the switching switch in the second switching circuit 44 is in the on state O, and the switching switch is coupled to the fourth passive circuit 43. The impedance of the entire current loop is small, and is the normal loop. Therefore, most signal power transmitted by the first coupler 10 is transmitted to the third coupler 41. The third coupler 41 communicates with the third device 300 through the second cable 500, to receive the communication signal sent by the second device 200.

The communication control method provided in this embodiment of this application further includes:
A second device 200 is used as the source node, and another second device 200 is used as the destination node. A communication signal flows from a side on which the second coupler 30 is located to a side on which the second coupler 30 is located.

One of a plurality of second couplers 30 receives the communication signal, and another of the plurality of second couplers 30 outputs the communication signal. The controller obtains the first channel 20 used to connect to the source node and the first channel 20 used to connect to the destination node.

The controller obtains a correspondence between the first channel 20 and the second coupler 30 configured to be coupled to the source node and a correspondence between the first channel 20 and the second coupler 30 configured to be coupled to the destination node, and determines the first channels 20 that are in communication currently. The second control signal sent by the controller to the second channel 40 controls the second switching circuit 44 to select the communication signal to be transmitted through the third passive circuit 42.

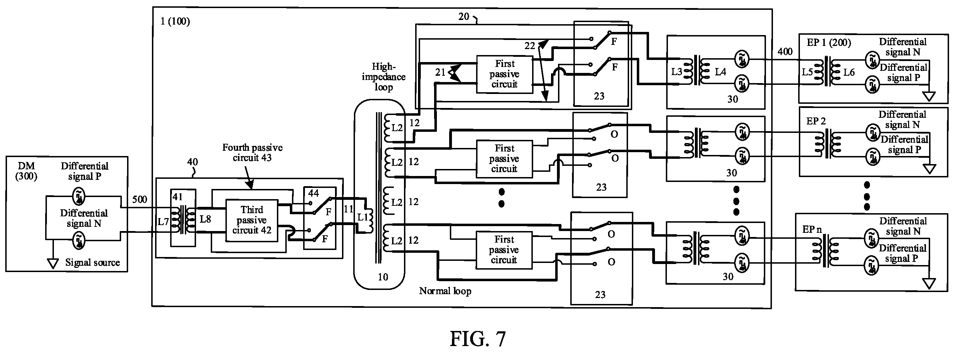

In FIG. 7, an example in which the n^{th} endpoint EP n is used as the source node, and a second endpoint EP 2 is used as the destination node is used for description.

The second coupler 30 corresponding to the source node receives the communication signal, and the communication signal is transmitted to the second end 12 (referred to as an n^{th} second end 12 in this specification) of the first coupler 10 through the first channel 20. In this case, the first channel 20 serves as the first channel 20 that is in communication, and the communication signal is transmitted to the first coupler 10 through a second branch 22. For a control process of the first channel 20, refer to the foregoing related descriptions of the control process of the first channel 20 that is in communication.

The n^{th} second end 12 is magnetically coupled to a 2^{nd} second end 12 (the second end 12 correspondingly coupled to the second endpoint EP 2), and couples the communication signal to the first channel 20 coupled to the 2^{nd} second end 12. In this case, the first channel 20 serves as the first channel 20 that is in communication, and the communication signal is transmitted to the second coupler 30 (the second coupler 30 corresponding to the second endpoint EP 2) through the second branch 22. For a control process of the first channel 20, refer to the foregoing related descriptions of the control process of the first channel 20 that is in communication.

The first channel 20 corresponding to another endpoint belongs to the first channel 20 that is not in communication, and an impedance of a current loop is large. Signal power transmitted by the n^{th} second end 12 is almost not transmitted to the first channel 20 that is not in communication, and power waste is small. For a control process of the first channel 20 that is not in communication, refer to the foregoing related descriptions of the control process of the first channel 20 that is not in communication.

In addition, the communication signal does not need to flow through the second channel 40, and the bolded part in the second channel 40 indicates the current loop path of the second channel 40. Under the control of the second control signal, the switching switch in the second switching circuit 44 is in an off state F, and the switching switch is coupled to the third passive circuit 42. Flowing through the high-impedance third passive circuit 42, the impedance of the entire current loop is large, and is a high-impedance loop. Therefore, the signal power transmitted by the n^{th} second end 12 is almost not transmitted to the third coupler 41, and the power waste is small.

According to the communication apparatus 1 provided in this embodiment of this application, the third coupler 41, the third passive circuit 42, the fourth passive circuit 43, and the second selection circuit 44 are disposed in the communication apparatus 1, so that the communication apparatus 1 not only has a capability of transmitting the signal from the first coupler 10 side to the second coupler 30 side, but also has a capability of transmitting the signal from the second coupler 30 side to the first coupler 10 side, and further has energy of transmitting the signal from a second coupler 30 side to another second coupler 30 side. In addition, the first channel 20 includes a first branch 21 and the second branch 22 that have different impedances. A flow path of the communication signal is adjusted and controlled, so that the first channel 20 connected to the source node or the destination node can have a smaller impedance, and the first channel 20 not connected to the source node or the destination node can have a larger impedance. The second channel 40 includes the third passive circuit 42 and the fourth passive circuit 43 that have the different impedances. The flow path of the communication signal is adjusted and controlled, so that when the communication signal flows through the third coupler 41, the second channel 40 can have a smaller impedance, and when the communication signal does not flow through the third coupler 41, the second channel 40 can have a larger impedance. In this way, when the communication apparatus 1 performs transmission, a communication loop is always the normal loop, and another branch is always the high-impedance loop, to ensure that the signal power in the communication path is always the highest, and the transmission rate can be improved.

### Example 4

An architecture of a communication system in Example 4 is the same as that in Example 1, and a main difference lies in the structure of the communication apparatus 1 in the first device 100.

An embodiment of this application provides a communication system. The communication system includes a first device 100, a plurality of second devices 200, and a third device 300.

For a coupling relationship among the first device 100, the second device 200, and the third device 300, refer to the related descriptions in Example 1. Details are not described herein again.

In terms of a structure of the communication apparatus 1, in some embodiments, the communication apparatus 1 uses a single-input single-output SISO data transmission mode.

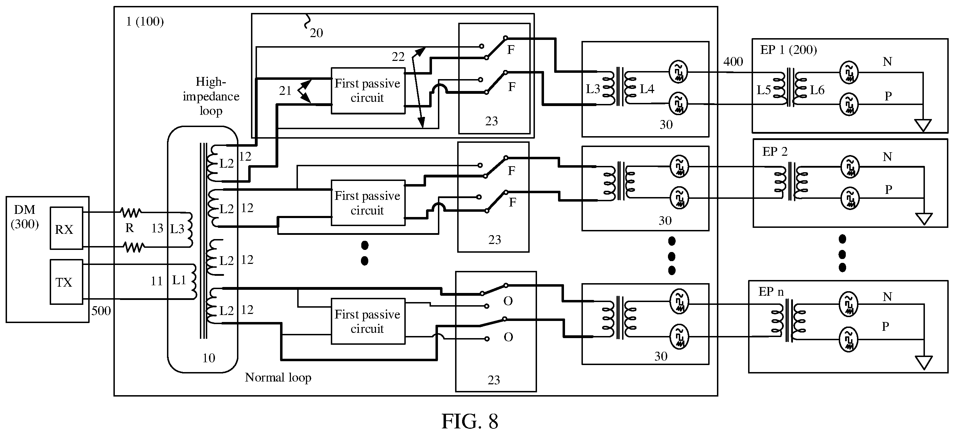

As shown in FIG. 8, the communication apparatus 1 includes a channel group. The channel group includes a first coupler 10, a plurality of first channels 20, and a plurality of second couplers 30.

On the basis of including a first end 11 and a second end 12, the first coupler 10 further includes a third end 13, and the third end 13 is coupled in series to a fifth passive circuit.

The fifth passive circuit may include passive components such as a capacitor, a resistor, an inductor, and a ferrite bead. In FIG. 8, an example in which the fifth passive circuit includes a resistor R is used for description.

For example, the first coupler 10 is a combiner, and the first coupler 10 is configured to convert one path of signal into a plurality of paths of signals. For example, the first coupler 10 includes a first coil L1, a plurality of second coils L2, and a third coil L3. Two ends of the first coil L1 are coupled to the first end 11 of the first combiner 10, two ends of the second coil L2 are coupled to the second end 12 of the first combiner 10, and two ends of the third coil L3 are coupled to the third end 13 of the first combiner 10. The first coil L1 is magnetically coupled to the second coil L2, the first coil L1 is magnetically coupled to the third coil L3, the second coil L2 is magnetically coupled to the third coil L3, and the plurality of second coils L2 may also be electromagnetically coupled to each other.

As shown in FIG. 8, the two ends of the third coil L3 are separately coupled in series to the resistor R, and the two ends of the first coil L1 are coupled to a signal line.

A structure of the first channel 20 may be the same as that in Example 1. Details are not described herein again.

When the communication apparatus 1 is used in the communication system, the first coil L1 is coupled to a transmit unit TX of the third device 300, and the third coil L3 is coupled to a receive unit RX of the third device 300 through the resistor R.

The following schematically describes the communication control method provided in this embodiment of this application.

An embodiment of this application provides a communication control method. For example, the communication control method may be applied to the communication apparatus 1.

The communication control method includes:

The third device 300 is used as a source node, the second device 200 is used as a destination node, and a communication signal flows from a side on which the first coupler 10 is located to a side on which the second coupler 30 is located.

The transmit unit TX in the third device 300 sends the communication signal, and the communication signal is transmitted to the communication apparatus 1 through a second cable 500. The first coupler 10 couples the communication signal to each second coupler 30, and then the second coupler 30 transmits the communication signal to the second device 200 through a first cable 400, to complete signal transmission. In a process in which the communication signal on the first coil L1 is coupled to the second coil L2, the resistor connected in series to the third coil L3 enables a channel in which the third coil L3 is located to be a high-impedance channel, to prevent signal flow.

A second device 200 is used as the source node, another second device 200 is used as the destination node, and a communication signal flows from a side on which the second coupler 30 is located to a side on which the second coupler 30 is located. For details, refer to the related descriptions in Example 1. Details are not described herein again.

The second device 200 is used as the source node, the third device 300 is used as the destination node, and a communication signal flows from the side on which the second coupler 30 is located to the side on which the first coupler 10 is located.

The communication signal sent by the second device 200 is coupled to the second coil L2 of the first coupler 10, and the second coil L2 is magnetically coupled to the third coil L3, to transmit the communication signal to the receive unit RX of the third device 300. In this case, the transmit unit TX in the third device 300 is in a high-impedance state, and impedes flow of the communication signal.

In FIG. 8, an example in which an n^{th} endpoint EP n is used as the source node is used for description. The first channel 20 corresponding to the n^{th} endpoint EP n is the first channel 20 that is in communication, and the first channel 20 corresponding to another endpoint belongs to the first channel 20 that is not in communication. For a control process, refer to the related descriptions of FIG. 7 in Example 3.

### Example 5

A main difference between Example 5 and Example 1 to Example 3 lies in that the communication apparatus 1 uses a multiple-input multiple-output (multiple-input multiple-output, MIMO) data transmission mode, and the communication apparatus 1 includes two channel groups.

An embodiment of this application provides a communication system. The communication system includes a first device 100, a plurality of second devices 200, and a third device 300.

For a coupling relationship among the first device 100, the second device 200, and the third device 300, refer to the related descriptions in Example 1. Details are not described herein again.

The first device 100 includes a communication apparatus 1 provided in this embodiment of this application. The communication apparatus 1 reallocates signal power on a communication path, to increase a transmission rate of the second device 200 that is in communication.

In terms of a structure of the communication apparatus 1, in some embodiments, the communication apparatus 1 uses a multiple-input multiple-output MIMO data transmission mode.

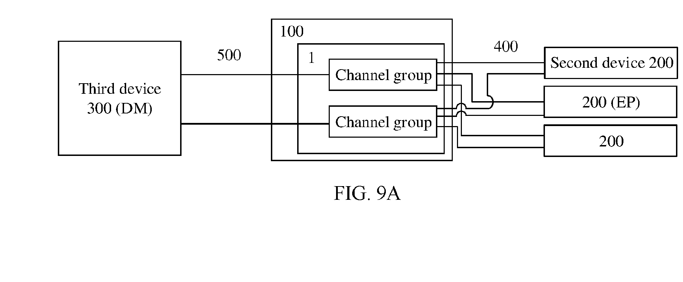

As shown in FIG. 9A, the communication apparatus 1 includes two parallel channel groups, and a structure of the channel group may be any channel group shown in Example 1 to Example 3. When the communication apparatus 1 is used in the communication system, the second device 200 is coupled to both the two channel groups, and the third device is also coupled to both the two channel groups.

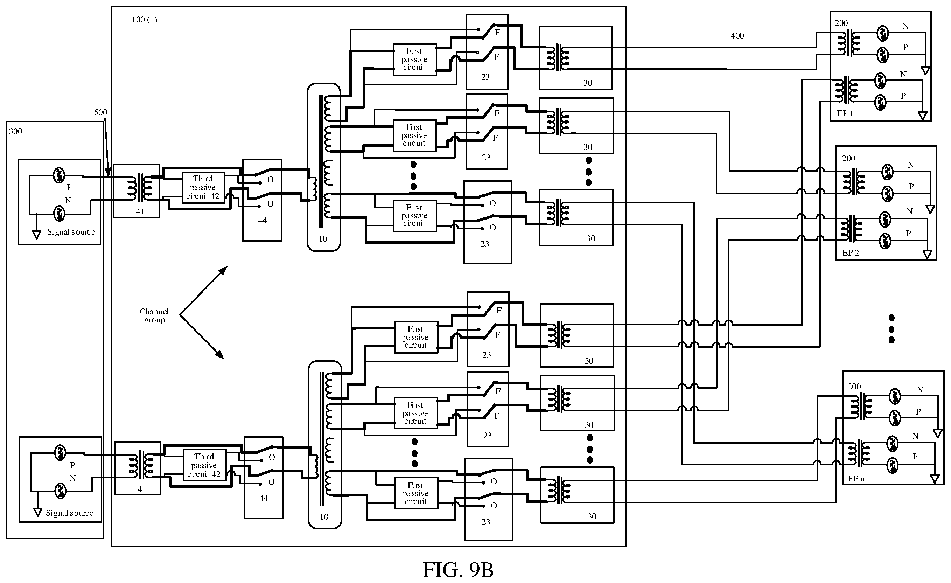

For example, as shown in FIG. 9B, the structure of the channel group is the channel group shown in FIG. 6. FIG. 9B shows the structure of the communication apparatus 1 and a coupling relationship between the communication apparatus 1 and the second device 200 and a coupling relationship between the communication apparatus 1 and the third device 300.

Certainly, each second device 200 needs to be coupled to both the two channel groups. However, a port in the channel group to which the second device 200 is coupled is not limited in this embodiment of this application. The correspondence in FIG. 9B is merely an example, and constitute no limitation.

The communication apparatus 1 provided in this embodiment of this application is not only applicable to the single-input single-output SISO data transmission mode, but also applicable to the multiple-input multiple-output MIMO data transmission mode, and has a wide application scope.

### Example 6

A main difference between this example and Example 1 to Example 5 lies in that in this example, the first device 100 and the third device 300 are integrated into a same device, and the first device 100 is no longer coupled to the third device 300 through the second cable 500.

An embodiment of this application provides a communication system. The communication system includes a first device 100 and a plurality of second devices 200, and the first device 100 is coupled to the plurality of second devices 200.

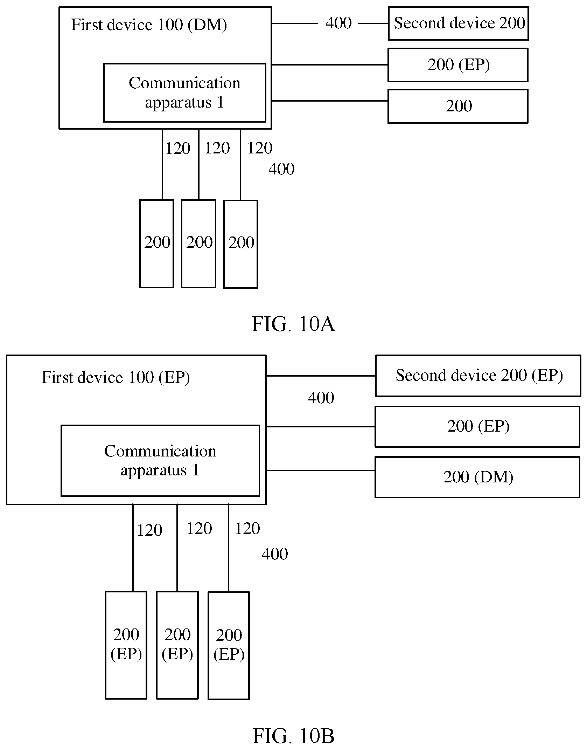

As shown in FIG. 10A, the first device 100 is used as a master node, and the second device 200 is used as a slave node. In other words, a communication apparatus 1 is integrated into the master node.

Alternatively, as shown in FIG. 10B, the first device 100 is used as the slave node, one of the second devices 200 is used as the master node, and others of the second devices 200 are used as slave nodes. In other words, the communication apparatus 1 is integrated into the slave node.

In other words, the plurality of second devices 200 in this embodiment of this application may be all slave nodes, or one of the plurality of second devices 200 is the master node, and others of the plurality of second devices 200 are the slave nodes.

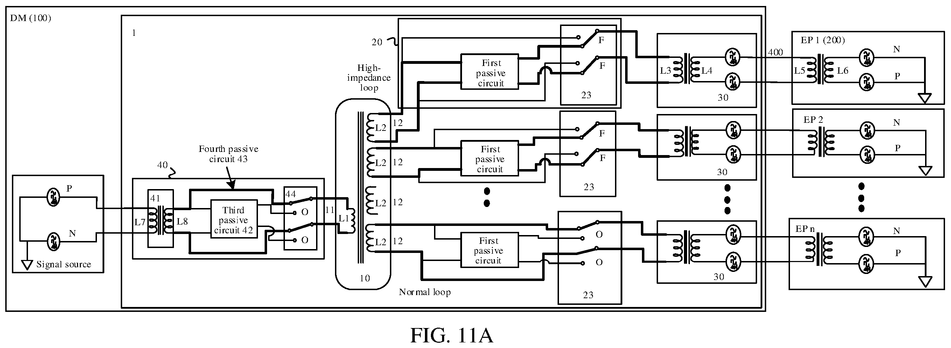

For example, as shown in FIG. 11A, the first device 100 is a domain master DM, the second device 200 is an endpoint EP, and the communication apparatus 1 provided in this embodiment of this application is integrated into the domain master DM.

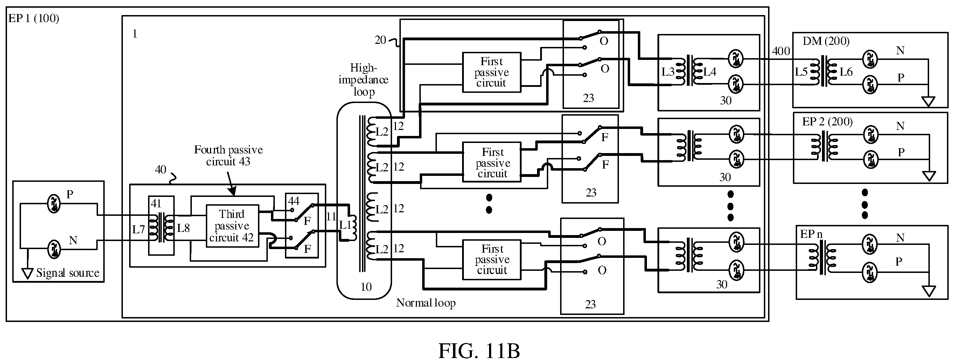

Alternatively, for example, as shown in FIG. 11B, the first device 100 is used as the endpoint EP (a first endpoint EP 1), one of the second devices 200 is used as the domain master DM, and others of the second devices 200 are used as endpoints EPs (a second endpoint EP 2 to an n^{th} endpoint EP n).

Certainly, in this example, the communication apparatus 1 may be any communication apparatus 1 shown in Example 1 to Example 5. FIG. 11A and FIG. 11B are merely examples, and constitute no limitation.

In some embodiments, for example, a controller may be integrated into a communication chip in the first device 100.

The communication apparatus 1 is integrated into the first device 100, so that an architecture of the communication system can be simplified.

### Example 7

In this example, the structure of the communication system is the same as the structures in Example 1 to Example 6, but the structure of the communication apparatus 1 is different.

An embodiment of this application provides a communication system. The communication system may be the communication system shown in FIG. 3, FIG. 9A, or FIG. 10A. Refer to the related descriptions in FIG. 3, FIG. 9A, or FIG. 10A. Details are not described herein again.

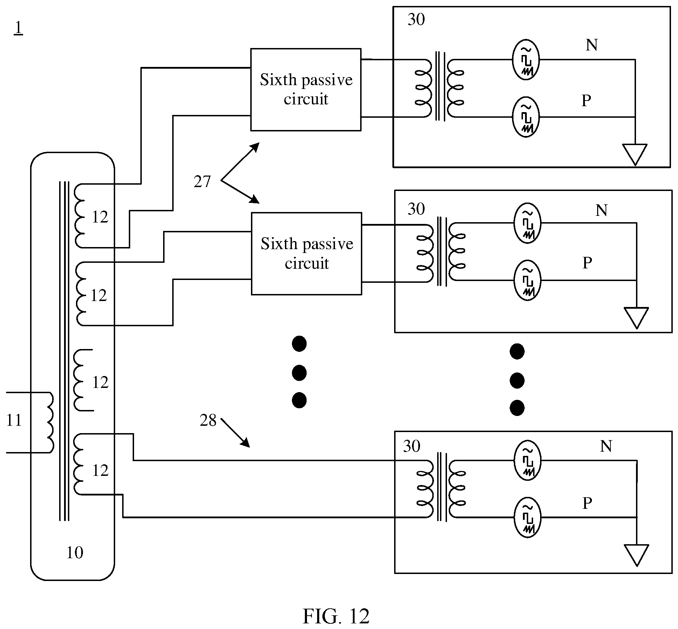

A first device 100 in the communication system includes a communication apparatus 1 provided in this embodiment of this application. As shown in FIG. 12, the communication apparatus 1 includes a channel group. The channel group includes a first coupler 10, a third channel 27, a fourth channel 28, and a plurality of second couplers 30. An impedance of the third channel 27 is greater than an impedance of the fourth channel 28. Alternatively, an inductive reactance of the third channel 27 is greater than an inductive reactance of the fourth channel 28.

A structure of the first coupler 10 may be the same as the structure of the first coupler 10 in Example 1. For example, the first coupler 10 includes a first end 11 and a plurality of second ends 12.

The third channel 27 is coupled between the second end 12 and the second coupler 30, and the fourth channel 28 is coupled between the second end 12 and the second coupler 30. The third channel 27 and the fourth channel 28 are disposed in parallel, and the second end 12 and the second coupler 30 that are coupled to the third channel 27 are different from the second end 12 and the second coupler 30 that are coupled to the fourth channel 28.

Certainly, the communication apparatus 1 may include one or more third channels 27, and the communication apparatus 1 may also include one or more fourth channels 28. In FIG. 12, an example in which the communication apparatus 1 includes a plurality of third channels 27 and one fourth channel 28 is merely used for description.

In some embodiments, as shown in FIG. 12, the third channel 27 includes a sixth passive circuit, the fourth channel 28 includes a signal line, and an impedance of the sixth passive circuit is greater than an impedance of the signal line.

For example, the sixth passive circuit includes passive components such as a capacitor, an inductor, a resistor, and a ferrite bead.

In some embodiments, the fourth channel 28 may also include the sixth passive circuit, provided that the impedance of the sixth passive circuit is greater than an impedance of the sixth passive circuit.

In some other embodiments, an inductive reactance of the sixth passive circuit is greater than an inductive reactance of the sixth passive circuit.

The communication apparatus 1 provided in this embodiment of this application includes the third channel 27 and the fourth channel 28. However, the impedances of the third channel 27 and the fourth channel 28 are unequal. Therefore, signal power allocated to the third channel 27 and the fourth channel 28 is also unequal. In a case in which transmit power is fixed, the signal power allocated to the fourth channel 28 with the smaller impedance is higher than the signal power allocated to the third channel 27 with the larger impedance, thereby implementing fixed allocation of the signal power. In this way, a signal transmission rate on the fourth channel 28 can be improved.

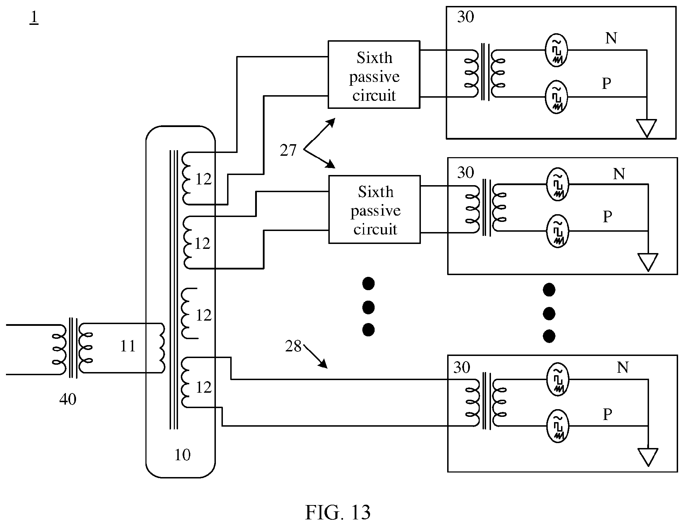

In some embodiments, as shown in FIG. 13, the channel group further includes a third coupler 41, and the third coupler 41 is coupled to the first end 11 of the first coupler 10.

A structure of the third coupler 41 may be the same as the structure of the third coupler 41 in Example 2.

The third coupler 41 is disposed in the communication apparatus 1, so that not only a communication signal can be transmitted from a side on which the first coupler 10 is located to a side on which the second coupler 30 is located, but also a communication signal can be transmitted from the side on which the second coupler 30 is located to the side on which the first coupler 10 is located, and an application scenario of the communication apparatus 1 is widened.

In some embodiments, the communication apparatus 1 includes two parallel channel groups, so that the communication apparatus 1 is not only applicable to a single-input single-output SISO data transmission mode, but also applicable to a multiple-input multiple-output MIMO data transmission mode, and has a wide application scope.

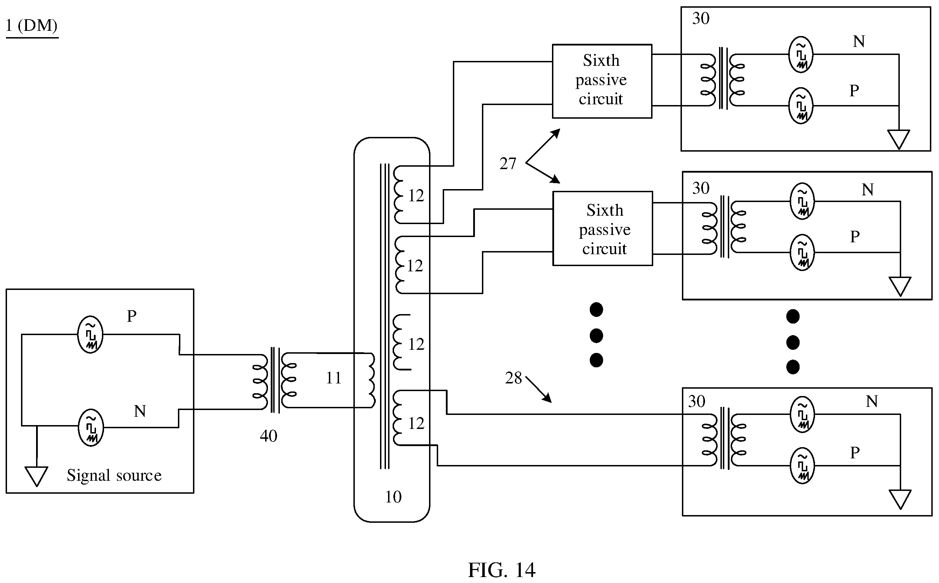

In some embodiments, as shown in FIG. 14, the communication apparatus 1 may alternatively be integrated into a domain master DM.

An application scenario of the communication apparatus 1 provided in this example may be the same as that of the communication apparatus 1 provided in Example 1 to Example 6 only by replacing the communication apparatus 1 provided in Example 1 to Example 6 with the communication apparatus 1 provided in this example. Details are not described herein again.

An embodiment of this application further provides a computer-readable storage medium. The computer-readable storage medium stores computer program code, and when the instructions are run on a computer, the computer is enabled to perform the communication control method.

An embodiment of this application further provides a computer program product. When the computer program product is run on a computer, the computer is enabled to perform the communication control method.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication apparatus, comprising a channel group, wherein
the channel group comprises a first coupler, a plurality of first channels, and a plurality of second couplers;
the first coupler comprises a first end and a plurality of second ends;
one end of each of the plurality of first channels is coupled to a corresponding one of the plurality of second ends, and the other end of each of the plurality of first channels is coupled to a corresponding one of the plurality of second couplers; and
the first channel comprises a first branch and a second branch, wherein an impedance of the first branch is greater than an impedance of the second branch, and the first channel is used to select to transmit, through the first branch, a communication signal transmitted by the communication apparatus, or transmit the communication signal through the second branch.

2. The communication apparatus according to claim 1, wherein an inductive reactance of the first branch is greater than an inductive reactance of the second branch.

3. The communication apparatus according to claim 1 or 2, wherein a resistance of the first branch is greater than a resistance of the second branch.

4. The communication apparatus according to any one of claims 1 to 3, wherein the first branch comprises a first passive circuit, the second branch comprises a second passive circuit, and the first channel further comprises a first switching circuit;
the first passive circuit and the second passive circuit are connected in parallel, and are connected in series to the first switching circuit; and an impedance of the first passive circuit is greater than an impedance of the second passive circuit; and
the first switching circuit is configured to: select, based on a first control signal, the first passive circuit to communicate with the second coupler, or select, based on a first control signal, the second passive circuit to communicate with the second coupler.

5. The communication apparatus according to claim 4, wherein the communication apparatus further comprises a controller, and the controller is configured to output the first control signal.

6. The communication apparatus according to claim 4 or 5, wherein the first passive circuit comprises at least one of a resistor, a capacitor, an inductor, or a ferrite bead.

7. The communication apparatus according to any one of claims 4 to 6, wherein the second passive circuit comprises a signal line.

8. The communication apparatus according to any one of claims 1 to 7, wherein the channel group further comprises a second channel, the second channel comprises a third coupler, and the third coupler is coupled to the first end.

9. The communication apparatus according to claim 8, wherein the second channel further comprises a third passive circuit, a fourth passive circuit, and a second switching circuit;
the third passive circuit and the fourth passive circuit are connected in parallel, and are coupled in series to the second switching circuit between the third coupler and the first end; and an impedance of the third passive circuit is greater than an impedance of the fourth passive circuit; and
the second switching circuit is configured to: select, based on a second control signal, the third passive circuit to communicate with the first end, or select, based on a second control signal, the fourth passive circuit to communicate with the first end.

10. The communication apparatus according to any one of claims 1 to 7, wherein the first coupler further comprises a third end, and the third end is coupled in series to a fifth passive circuit.

11. The communication apparatus according to any one of claims 1 to 10, wherein the communication apparatus comprises two parallel channel groups.

12. The communication apparatus according to any one of claims 1 to 11, wherein the communication apparatus is integrated into an endpoint EP device, a station STA device, a domain master DM device, or a central coordinator CCO device.

13. A communication apparatus, comprising a channel group, wherein
the channel group comprises a first coupler, a third channel, a fourth channel, and a plurality of second couplers;
the first coupler comprises a first end and a plurality of second ends;
the third channel is coupled between a second end and a second coupler, the fourth channel is coupled between a second end and a second coupler, and the second end and the second coupler that are coupled to the third channel are different from the second end and the second coupler that are coupled to the fourth channel; and
an impedance of the third channel is greater than an impedance of the fourth channel.

14. The communication apparatus according to claim 13, wherein the third channel comprises a sixth passive circuit, the fourth channel comprises a signal line, and an impedance of the sixth passive circuit is greater than an impedance of the signal line, or an impedance of the sixth passive circuit is greater than an impedance of the signal line.

15. The communication apparatus according to claim 13 or 14, wherein the channel group further comprises a third coupler, and the third coupler is coupled to the first end.

16. A communication system, wherein the communication system comprises a first device and a plurality of second devices, the plurality of second devices are coupled to the first device through first cables respectively, the first device comprises a communication apparatus, and the communication apparatus is the communication apparatus according to any one of claims 1 to 15.

17. The communication system according to claim 16, wherein the communication system further comprises a third device, and the third device is coupled to the first device through a second cable.

18. The communication system according to claim 16, wherein the communication apparatus comprises two parallel channel groups; and
the second device is coupled to the first device through two first cables.

19. A communication control method, applied to a communication apparatus, wherein the communication apparatus comprises the communication apparatus according to any one of claims 1 to 12; and
the communication control method comprises:
transmitting, through first channels, communication signals received and sent by the communication apparatus; selecting, by a first channel used to connect to a source node or a destination node, to transmit a communication signal through a first branch; and selecting, by a first channel not used to connect to the source node or the destination node, to transmit a communication signal through a second branch.

20. The communication control method according to claim 19, wherein the communication control method further comprises: transmitting the communication signal through a second channel; and selecting, by the second channel based on a second control signal, the communication signal to be transmitted through a third passive circuit, or selecting, based on a second control signal, the communication signal to be transmitted through a fourth passive circuit.

21. The communication control method according to claim 20, wherein
when the second channel is used to connect to the source node or the destination node, the second control signal sent by a controller to the second channel controls a second switching circuit to select the communication signal to be transmitted through the fourth passive circuit; or
when the second channel is not used to connect to the source node or the destination node, a second control signal sent by a controller to the second channel controls a second switching circuit to select the communication signal to be transmitted through the third passive circuit.

22. The communication control method according to any one of claims 19 to 21, wherein the communication control method further comprises:
receiving, by a first coupler, the communication signal sent by the source node, and outputting, by one of a plurality of second couplers, the communication signal to the destination node; and obtaining the first channel used to connect to the destination node.

23. The communication control method according to any one of claims 19 to 21, wherein the communication control method further comprises:
receiving, by one of a plurality of second couplers, the communication signal sent by the source node, and outputting, by a first coupler, the communication signal to the destination node; and
obtaining, by the controller, the first channel used to connect to the source node.

24. The communication control method according to any one of claims 19 to 21, wherein the communication control method further comprises:
receiving, by one of a plurality of second couplers, the communication signal, and outputting, by another one of the plurality of second couplers, the communication signal; and
obtaining, by the controller, the first channel used to connect to the source node and the first channel used to connect to the destination node.

25. The communication control method according to claim 23 or 24, wherein the controller senses a signal frame, and obtains the first channel used to connect to the source node and the first channel used to connect to the destination node.

26. A computer-readable storage medium, wherein the computer-readable storage medium comprises computer instructions, and when the computer instructions are run on a device, the device is enabled to perform the communication control method according to any one of claims 19 to 25.
